# EUROPEAN PATENT APPLICATION

(11) **EP 0 659 017 A2**
(43) Date of publication of application: **21.06.1995**
(21) Application number: 94119641.2
(22) Date of filing: 13.12.1994
(51) Int. Cl.: H04N 5/232

(54) **Portable electronic camera providing optional parameter setting from a computer**

(30) Priority: 15.12.1993 US 167756
(71) Applicant: EASTMAN KODAK COMPANY, Rochester, New York 14650-2201 (US)
(72) Inventor: Parulski, Kenneth A., c/o Eastman Kodak Company, Rochester, New York 14650-2201 (US); Takizawa, Yoshinori, c/o Eastman Kodak Company, Rochester, New York 14650-2201 (US)
(74) Representative: Schmidt, Peter, Dipl.-Ing.

(57) **Abstract**

An electronic camera (10) connectable to a computer (12) is operable either by itself or in direct connection with the computer (12) through an interface device (14, 16). An imaging stage (12a) generates and processes an image signal according to capture parameters set from the control section (50) on the camera. By interposing a capture control stage (68) between the control section (50) and a control processor (44) that controls the imaging stage (21a), capture parameters may be set either from the control section (50) on the camera, or from like parameters entered through the interface device (14,16) from the computer (12).

## Description

### Field of Invention

This invention pertains to the field of electronic imaging and, more particularly, to a portable electronic camera operated as an input device to a personal computer.

### BACKGROUND OF THE INVENTION

Video cameras and computer frame grabbers are well known in the prior art. A typical system employs a video motion camera (such as the CCD 4000 RGB Flash-Sync Camera manufactured by Eastman Kodak Co., Rochester, N.Y.) and a frame grabber board (such as a TARGA™ frame store board manufactured by True Vision, Inc., Indianapolis, Indiana) attached to the PC bus of a personal computer or professional workstation. The camera provides the timing to interface with the video frame store board by activating the frame acquire line of the frame store board whenever an external voltage input to the camera is dropped low (e.g., by dropping the "Camera Acquire In" line to the CCD 4000 camera). While the external voltage input may be separately and directly enabled, it is customary when using a video camera (such as the CCD 4000 camera) with a personal computer to design software to activate the camera's frame acquire line from the computer. To capture an image into the computer in such a customary application, the operator frames the subject while observing the live camera output on a video monitor, and then interacts with the computer keyboard at the proper moment to capture the image.

The control of the camera from the computer keyboard is a problem in certain situations. For instance, a low cost electronic still camera may be tethered to a small, battery operated notebook or penpad personal computer which provides image processing, storage, and display of the captured images. By relying on the computer to perform these tasks, the camera cost can be greatly reduced. In such an application, the computer would typically be slung over the shoulder or rested on a table, while the user holds the camera to compose the image. However, if the user must press buttons or pointers on the computer to capture each image, as is typical in the frame grabber prior art, the system will be very unwieldy to use since the user will have to hold the camera in the right position with one hand, while operating the computer with the other hand.

An improved tethered camera is described in Serial Number 938,573, "Hand-manipulated Electronic Camera Tethered to a Personal Computer", filed August 31, 1992 (in the name of the present assignee) as a continuation of Serial Number 805,220, filed December 11, 1991. The camera ergonomically acts like an independent, self-functioning peripheral device while in actuality depending on instructions from the computer. The camera is remotely linked to the computer, e.g., by a cable, thereby allowing mobility of the camera independent of the computer. The readiness of the computer to accept an image signal is manifested by means within the camera, which then conditions the camera for image capture in response to a status signal from the computer transmitted through the remote link. In particular, a capture switch is positioned on the camera for user actuation, although the camera inhibits actuation of the capture switch until receipt of the status signal. Such a camera can only operate when it is connected to the computer via the tether cable. Accordingly, such a camera does not allow capture of still images at locations remote from the computer, where the camera must be detached (untethered) from the computer.

Other electronic cameras known in the prior art are operated apart from the computer and then allow the computer to download image data from the camera to the computer via a host adaptor. Typical of such cameras is a camera sold by Dycam, Inc., Chatsworth, California; this camera includes a CCD sensor and an integral digital memory to allow the user to take several still images. The user can then transfer, or "download", the images into a computer by attaching the camera to the host adaptor, which itself is attached by cable to an interface port on the computer. This allows the images captured earlier to be transferred into the computer. The camera memory may then be erased by accordingly instructing the computer to do the erasure, and the camera is then available for more pictures. The application program also allows the user to capture additional images via shutter triggering instructions from the computer, and also allows a choice of camera codes, including a standard code that automatically activates a flash under the appropriate scene conditions and a tripod code that disables the automatic flash and allows longer exposure times (which, in this case, may also be entered from the computer).

Many users, however, would like to have an electronic still camera whose features can be easily applied for two different uses: capture of still images at locations remote from the computer, and "tethered" computer camera applications, for example, "computer teleconferencing" type applications. Instead of forcing the user to choose between camera or computer control to obtain the full capabilities of the camera, what is needed is a camera design which allows for full-featured application of the camera to both of these uses.

### SUMMARY OF THE INVENTION

We have departed from the usual practice of weighting the camera's control either toward the camera or toward the computer. By providing a computer capture control mode within the camera's normally stand-alone control electronics, it is possible to set the important capture parameters from the computer, and not merely to exercise the shutter release.

Accordingly, the invention includes a portable, electronic camera connectable to a computer and operable either by itself or in direct connection with the computer, in either case capturing an image and subsequently providing the captured image to the computer for storage therewith. The camera includes a signal interface device for linking the camera to the computer, as well as an imaging stage for generating an image signal, and for providing a processed version of the image signal to the signal interface device. Capture parameters are set by a parameter setting stage to include at least one of an image erase function, a resolution level, a mode of compression, a color or monochrome capture mode, or a continuous or single mode of capture. A control stage in the camera is responsive to either the parameter settings from the parameter setting stage, or to like parameters input through the signal interface device from the computer, for driving the imaging stage to accordingly process the image signals pursuant to said at least one capture parameter.

The advantageous effect of the invention is to permit the computer to instruct a full panoply of functions, such as erase, resolution, color mode, compression, and sequencing of images. This allows the camera to be easily applied to completely different uses: capture of still images at locations remote from the computer, and "tethered" computer camera applications, such as "computer teleconferencing", where the computer is the most convenient source of parameter settings.

### BRIEF DESCRIPTION OF THE DRAWINGS

The invention will be described in relation to the drawings, in which
Figure 1 is a block diagram of a portable, electronic camera connectable to a personal computer for operation according to the invention;
Figure 2 is a flow diagram showing operation of the camera illustrated in Figure 1;
Figure 3 shows a menu of capture parameters presented to the user by the computer; and
Figure 4 is a block diagram of the computer capture control stage within the control electronics of the camera of Figure 1.

### DESCRIPTION OF THE PREFERRED EMBODIMENTS

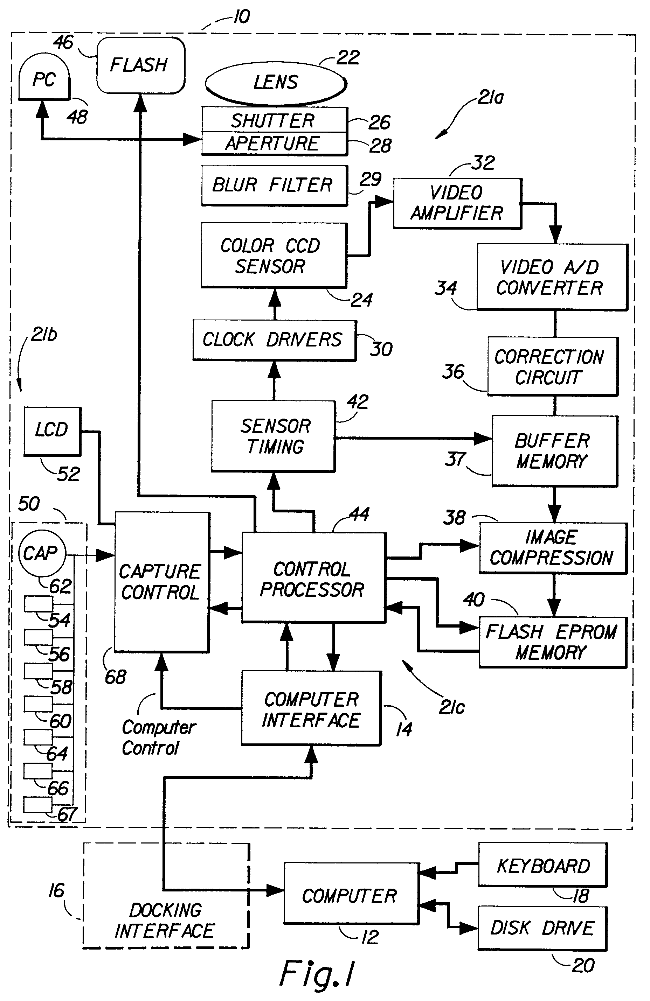

Referring first to Figure 1, an electronic camera 10 is shown coupled to a personal computer 12 through a computer interface 14. The camera 10 is operable in either of two modes: a stand-alone mode in which images are captured and internally stored, and a "docked" mode in which the camera is coupled to the computer 12. In the latter mode, the interface includes a docking adaptor 16 attached between the camera 10 and the computer 12 for downloading images to the computer. The nature of the docking adaptor 16 depends upon the nature of the interface; as shown in Figure 1, it may simply be an interface cable for an RS-232 serial connection between the camera 10 and the computer 12. Alternatively, the docking adaptor 16 may comprise a module that plugs into the camera (via suitable connectors, not shown) and optionally contains additional features, such as a charger for charging the camera's battery supply (not shown). The computer 12 additionally includes a conventional keyboard 18 and a conventional disk drive 20, the latter being used to store pictures captured by the camera 10. Although not shown, the computer 12 includes the usual storage devices for buffering image data coming from the camera 10.

Apart from the interface 14, the camera is generally divided according to the invention into an imaging stage 21a for generating and processing an image signal from a captured image, a parameter setting stage 21b for setting the parameters of capture, and a control stage 21c for driving the imaging stage 21a to capture and process the image signal pursuant to the capture parameters. The imaging stage 21a includes an optical system, represented by the lens 22, for directing image light from an object (not shown) to an image sensor 24. The image sensor 24 includes a color filter array overlying an array of photosites, the color filter array being arranged in a pattern, such as the familiar "Bayer array" described in U.S. Patent No. 3,971,065, which is incorporated herein by reference. The "Bayer array" includes luminance pixels arranged horizontally and vertically in a "checkerboard" pattern, with chrominance pixels filling the interstices. The optical system includes a shutter 26 and an aperture 28 for regulating the quantity of image light exposed upon the image sensor 24. A blur filter 29 is included to reduce aliasing problems. The sensor 24 is driven by a sensor clock driver 30, which provides the signals used to clock an output image signal from the sensor 24. The output image signal is applied to a video amplifier 32, and therefrom to a video analog/digital (A/D) converter 34. The digitized image signals from the A/D converter 34 are gamma-corrected and adjusted for white balance in a correction circuit 36, stored in a buffer memory 37, and then processed in a compression stage 38 prior to storage in a memory 40. The memory is preferably a non-removable flash electrically-programmable read only memory (FLASH EPROM), although a hard disk drive, a floppy disk drive, a removable memory IC card, or similar device could be used. Different types of compression may be employed, but for purposes of this embodiment, a conventional adaptive differential pulse code modulation (ADPCM) technique is employed.

The control stage 21c includes a timing generator 42 for providing timing signals to the clock driver 30 for controlling the image sensor 24, and to a programmed control processor 44, which in turn controls the image compression stage 38, the memory 40 and the computer interface 14. The control processor 44 also controls a flash unit 46, the shutter 26, and the aperture 28. While the control processor 44 automatically controls image exposure upon the CCD sensor 24 by means of data input from a photocell 48, the parameter setting stage 21b includes a plurality of switches provided in a control setting section 50 for manually activating a variety of additional features. (Some switches directly activate the respective features, while other switches activate a menu of choices on a liquid crystal display (LCD) 52 in the parameter setting stage 21b.)

For instance, a switch 54 allows the user to select which of two (high or low) different resolution levels of sensor data are stored in the storage device 40, a switch 56 activates a low resolution "burst" mode in which several pictures are rapidly taken, a switch 58 activates the flash unit 46, and a switch 60 activates a self-timer delay mode. A capture switch 62 initiates each exposure. The liquid crystal display (LCD) 52 indicates the selected feature values. Depending upon the capabilities of the camera, further input may be provided, e.g., levels of compression (number of bits) may be selected through a switch 64, and the color mode (black/white or color) may be designated through a switch 66. The (LCD) display 52 may also be used to tell the user the status of the camera, for example, whether the camera is ready to capture the next image, whether the camera is in the process of storing an image in the memory 40, and how many images can be stored before the memory 40 is full. In certain situations, setting capture parameters may involve freeing up memory space in the camera. For that reason, erasure of a selected image, or all images, can be controlled from a switch 67. Activation of the switch 67 causes the control processor 44 to erase a selected image, or all images, from the memory 40.

An exemplary use of the control setting section 50 is to provide a user selectable record size. The timing generator 42 is responsive to the resolution switch 54 to control the order in which color image pixels are selected for storage in both vertical and horizontal directions. The order selected by the resolution switch 54 includes a full resolution mode, and at least one reduced resolution mode in which the color image pixels are subsampled. Consequently, in the reduced resolution mode, more images may be stored in the memory 40 before it is filled, as compared to the full resolution mode. The burst mode, which is activated by the switch 56, causes the control processor 44 to repetitively initiate image capture by repeatedly driving the sensor 24 to capture a burst of images. These images would ordinarily be taken in the low resolution mode, in order to preserve storage space. The compression mode, which is activated by the switch 64, allows choice of different compression levels, each level causing the image compression stage 38 to utilize a different quantization table to thereby quantify the number of bits in the compressed output. The color mode switch 66 causes the control processor to, e.g., select all pixels of the sensor 24, or to select only the luminance pixels for a black/white rendition of the image.

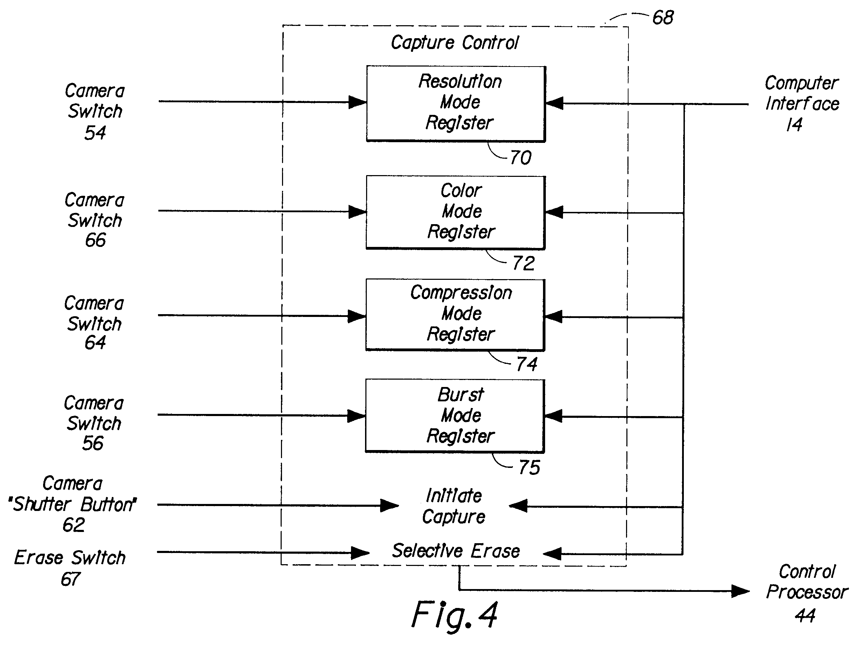

The improvement according to the invention further includes the incorporation of a capture control stage 68 in the control stage 21c, which is shown in Figures 1 and 4, for illustrative purposes, as a separate stage interposed between the control setting section 50 and the control processor 44. The capture control stage 68 allows the computer 12 to control a panoply of specific functions, and not, as in the prior art, just to initiate capture or to disable the flash and control exposure time in certain situations. For example, the computer 12 can instruct the camera 10 to use a specific resolution level, compression mode, color mode, capture repetition (burst) mode, or to selectively erase one image, or all images. (Typically the capture control functionality would be within the programmed control processing element 44, but is separated out in Figure 1 for purpose of illustration.) Figure 4 shows an implementation of the capture control stage 68 in a microprocessor or a programmable logic device with a group of digital registers 70, 72, 74, 75 that store the resolution, color, compression, and burst modes, respectively. The registers 70, 72, 74, 75 may be altered either by the switches on the camera 10 within the control setting section 50, or by commands from the keyboard 18 of the computer 12 via the docking adaptor 16 and the computer interface 14. The capture and erase functions, furthermore, are separately controlled through the capture control stage 68 from either the keyboard 18 or the parameter setting stage 21b.

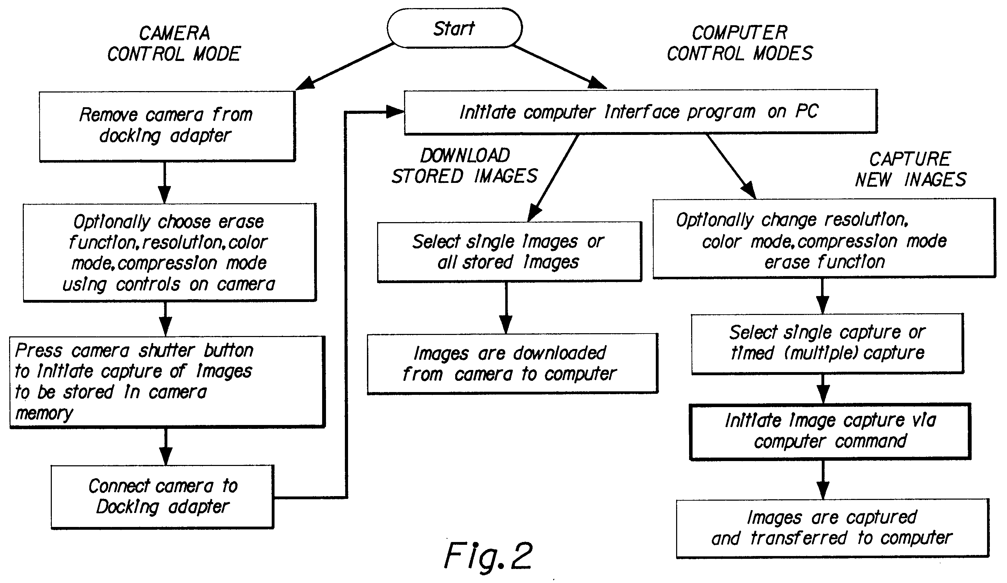

The operation of the camera is generally shown in Figure 2 in each of its two modes: a camera control mode and a computer control mode. In the camera control mode, the camera is removed from the docking adaptor 16 and is used at a location significantly remote from the computer 12. The camera is periodically returned to the computer, and images are then downloaded through the docking adaptor 16 to free up the camera memory for more photographs. Because it is often inconvenient for the user to return to the computer to download images, the camera control mode provides the user with the option to store some, or all, of the images at less than the highest resolution level, so that more images may be stored in the camera memory before having to return to the computer 12 to download the images. The functionality is also provided to erase some, or all images. In addition, the user selects the color mode, compression mode and burst mode using controls in the camera. When the user presses the capture switch 62 on the camera, the images are captured and stored in the memory 40 according to the set parameters.

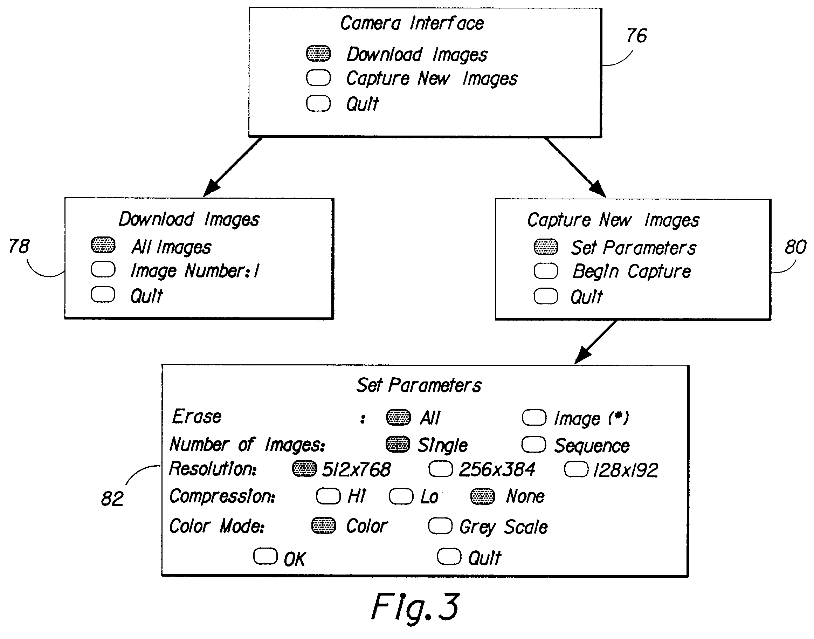

After the images are captured, the camera is connected to the docking adaptor 16 and the interface is initiated through the computer 12. To initiate downloading, the user engages the computer control mode shown in Figure 2 by opening the camera application software program and selecting the camera interface options from the interface menu screen 76 shown in Figure 3. The "download images" option is selected from the menu interface screen 76, and which images to download ("all images" or by "image number: # ") are selected from a downloading menu screen 78. The desired images are selected, and perhaps previewed, through the computer 12, and accordingly downloaded to its resident memory.

If the user decides to enter the computer capture control mode by means of the interface menu screen 76, the user selects the desired capture option from the capture screen 80 and sets the capture parameters from the capture parameters screen 82. The parameters specified by the capture parameters screen 82 include erase all or a selected image (by specifying picture #), capturing a single image or a sequence of images, capturing color or monochrome images, capturing full resolution or lower resolution images, and the compression mode applied after capture. Capturing a sequence of images, for example, is particularly useful in a computer teleconferencing application, in order to send a series of images of the user, or other objects, to another computer user via a computer data network.

The parameters mode is invoked from the capture screen 80 and the "erase", "number of images", "resolution", "compression," and "color mode" parameters are set from the capture parameters screen 82. The signals corresponding to these parameters are transmitted back to the camera 10, via the docking adaptor 16, where the parameter signals set the corresponding digital registers 70, 72, 74, 75 in the capture control stage 68, or logically connect through to the control processor 44. Once the parameter selections are made, the user initiates capture by selecting "begin capture" from the capture menu screen 80. This begins a sequence which downloads the requested parameters to the camera, and requests that the camera take a picture; the camera responds by actuating the aperture 28 and the shutter 26 according to the light conditions, firing the flash 46 if required, reading the image data from the sensor 24 into the memory 40, and downloading the digitized image data over the docking adaptor (RS-232 cable) 16 to the computer's memory.

The computer capture control mode provided according to the invention by the camera control stage 68 is normally provided by appropriate programming of software, a task within the capability of one of ordinary skill in this art given the system specification set forth by this description. The user interface provided by the computer 12, and as represented by the menu screens of Figure 3, is typically provided by application software supplied with the camera 10 to the user. Such software is likewise within the capability of one of ordinary skill in this art.

As is evident from the foregoing description, certain aspects of the invention are not limited to the particular details of the examples illustrated, and it is therefore contemplated that other modifications and applications will occur to those skilled in the art. It is accordingly intended that the claims shall cover all such modifications and applications as do not depart from the true spirit and scope of the invention.

## Claims

1. A portable, electronic camera (10) connectable to a computer (12) and operable either by itself or in direct connection with the computer for capturing an image and subsequently providing the captured image to the computer for storage therewith; said camera comprising:
a signal interface device (14) for linking the camera (10) to the computer (12);
an imaging stage (21a) for generating an image signal from a two-dimensional array (24) of photosites covered by a pattern of color filters, and for providing a processed image signal to said signal interface device (14);
a parameter setting stage (50) for setting capture parameters including at least one of an image erase function, a resolution level, a mode of compression, a color or monochrome capture mode, or a continuous or single mode of capture;
a control stage (21c) responsive to either the parameter settings from the parameter setting stage (50), or to like parameters input through said signal interface device (14) from the computer (12), for driving said imaging stage (21a) to accordingly process the image signals pursuant to said at least one capture parameter.

2. An electronic camera as claimed in claim 1 wherein said signal interface device includes an adaptor (16) that is interposed between the camera (10) and the computer.

3. An electronic camera as claimed in claim 1 wherein said imaging stage (21a) includes an image compression stage (38).

4. An electronic camera as claimed in claim 3 wherein said parameter setting stage (50) for setting the mode of compression causes the level of compression utilized by said image compression stage (38) to be set.

5. An electronic camera as claimed in claim 1 wherein said parameter setting stage (50) for setting the resolution level causes the image signal to be processed either from substantially all the photosites or from at least one pattern of sampled photosites.

6. An electronic camera as claimed in claim 1 wherein said parameter setting stage (50) for setting the color or monochrome capture mode causes either substantially all the photosites to be processed or a subset of the photosites comprising the luminance photosites to be processed.

7. An electronic camera as claimed in claim 1 wherein said control stage (21c) includes a control processor (44) and a capture control stage (68), interposed between the parameter setting stage (50) and the control processor (44), for determining whether the capture control parameters are input from the parameter setting stage (50) or the signal interface device (14).

8. A portable, electronic camera (10) connectable to a computer (12) and operable either by itself or in direct connection with the computer for capturing an image and providing the captured image to the computer for storage therewith; said camera comprising:
a signal interface device (14) for linking the camera to the computer;
an image sensor (24) for generating an image signal representative of color image pixels obtained from a two-dimensional array of photosites covered by a pattern of color filters;
means (50, 68, 44) for obtaining a plurality of pixel resolutions from the image sensor, including at least a full resolution in which the image signal represents all color image pixels and a reduced resolution in which the image signal represents a fewer number of color image pixels;
a memory (37) for storing the color image pixels corresponding to at least one image in either full or reduced resolution;
a parameter setting stage (50) for setting capture parameters including at least the resolution level; and
a control stage (21c) responsive to either the parameter settings from the parameter setting stage (50), or to like parameters input through said signal interface device (14) from the computer (12), for accordingly operating upon the image signals to produce the selected level of resolution.

9. A portable, electronic camera (10) connectable to a computer (12) and operable either by itself or in direct connection with the computer for capturing an image and subsequently providing the captured image to the computer for storage therewith; said camera comprising:
a signal interface device (14) for linking the camera (10) to the computer (12);
an image sensor (24) for generating image signals representative of color image pixels arranged in vertical and horizontal directions as obtained from a two-dimensional array of photosites covered by a pattern of luminance and chrominance color filters;
a buffer memory (37) having sufficient capacity for storing the color image pixels corresponding to at least one image;
a signal processor (38) for generating a processed image signal by compressing the image signal stored in said buffer memory (37) according to a variable compression factor;
an output memory (40), connected subsequent to the buffer memory (37), for storing processed image signals obtained from the buffer memory;
a parameter setting stage (50) for setting capture parameters including at least the variable compression factor;
a camera control stage (21c) responsive to either the parameter settings from the parameter setting stage (50), or to like parameters input through said signal interface device (14) from the computer (12), for applying at least the variable compression factor to said signal processor (38).
